# EUROPEAN PATENT APPLICATION

(11) **EP 3 067 777 A1**
(43) Date of publication of application: **14.09.2016**
(21) Application number: 16159254.8
(22) Date of filing: 08.03.2016
(51) Int. Cl.: G06F 1/16, H04M 1/725

(54) **METHOD AND APPARATUS FOR PREVENTING LOSS OF WEARABLE ELECTRONIC DEVICE**

(30) Priority: 09.03.2015 KR 20150032527
(71) Applicant: Samsung Electronics Co., Ltd., Gyeonggi-do 16677 (KR)
(72) Inventor: BAEK, In-Ho, Gyeonggi-do 16677 (KR)
(74) Representative: HGF Limited

(57) **Abstract**

A method and an apparatus for preventing the loss of a wearable electronic device are provided. A method for communicating with a wearable electronic device by an electronic device may include receiving a signal according to a state change of the wearable electronic device, storing information including a location of generation of the signal from the wearable electronic device, in response to the received signal, and outputting a warning corresponding to the information.

## Description

### TECHNICAL FIELD

The present disclosure relates to a method and an apparatus for preventing the loss of a wearable electronic device.

### BACKGROUND

With the recent remarkable progress of information communication technology, semiconductor technology, and the like, the diffusion and use of various portable terminals have been rapidly increasing. Particularly, recent portable terminals have expanded beyond their respective traditional unique fields, and have reached a mobile convergence stage including their respective traditional unique fields and the fields of other terminals. A mobile communication terminal, which is a representative portable terminal, provides not only typical communication functions such as a voice call function and a message transmission/reception function, but also various functions such as a television (TV) watching function, a music reproduction function, a photographing function, an Internet access function, and the like.

Nowadays, a wearable device has been developed which is a kind of portable terminal and which has a form similar to that of a wristwatch of a user, a headset of the user, or glasses of the user and can be worn on a body part of the user. The wearable device may operate independently, or may operate as a companion device in such manner as to operate in connection with another portable terminal (a host device).

Also, recently, the number of hearing-impaired people has increased due to the use of audio devices, an increase in the population share of the elderly, and an increase in noisy environments. Accordingly, with an increase in the demand of hearing aids, a hearing aid capable of performing short-range communication, which is a part of communication technology of a wearable device, has been developed, and the demand of the hearing aids capable of performing the short-range communication has been on the rise.

In this regard, the hearing aid or the wearable device is manufactured to have a small size so that the hearing aid or the wearable device can be worn on the body part of the user. Particularly, by the nature of the age of a user of the hearing aid, when the user does not use the hearing aid, the user puts the hearing aid at a particular place and often forgets to take the hearing aid, so that there is a high risk of losing the hearing aid. Therefore, there is a need for a new method for locating the hearing aid in various situations and environments of the daily life of the user.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and an apparatus which can recognize a situation in which a wearable electronic device is likely to be lost, can record a location and a time point of losing the wearable electronic device, enable a user to easily locate the wearable electronic device by using the recorded location and time point, and can prevent the loss of the wearable electronic device.

Another aspect of the present disclosure is to provide a method and an apparatus for preventing the loss of a wearable electronic device.

In accordance with an aspect of the present disclosure, a method for communicating with a wearable electronic device by an electronic device is provided. The method may include receiving a signal according to a state change of the wearable electronic device, storing information including a location of generation of the signal from the wearable electronic device, in response to the received signal, and outputting a warning corresponding to the information.

In accordance with another aspect of the present disclosure, an electronic device is provided. The electronic device may include a communication unit configured to establish a communication session with a wearable electronic device, and receive a signal according to a state change of the wearable electronic device, and a control unit configured to perform a control operation for storing information including a location of generation of the signal from the wearable electronic device in response to the received signal, and output a warning corresponding to the information.

In accordance with another aspect of the present disclosure, a method for communicating with an electronic device by a wearable electronic device is provided. The method may include sensing a state of the wearable electronic device and transmitting a signal according to a state change of the wearable electronic device to an electronic device having a communication session established with the wearable electronic device.

In accordance with another aspect of the present disclosure, a wearable electronic device is provided. The wearable electronic device may include a sensing unit configured to sense a state of the wearable electronic device, a control unit configured to perform a control operation for transmitting a signal according to a state change of the wearable electronic device, which is sensed by the sensing unit, to an electronic device having a communication session established with the wearable electronic device, and a communication unit configured to establish a communication session with the electronic device and transmit the signal.

Various embodiments of the present disclosure provide a method and an apparatus for preventing the loss of the wearable electronic device. Therefore, a situation in which the wearable electronic device is likely to be lost can be recognized, a location and a time point of losing the wearable electronic device can be recorded, and a user can easily locate the wearable electronic device by using the recorded location and time point, so that the loss of the wearable electronic device can be prevented.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A and 1B are an exemplified view and a block diagram illustrating an electronic device and a wearable electronic device having a communication session established with the electronic device according to various embodiments of the present disclosure;
FIG. 2 is a signal flow diagram illustrating a process in which a wearable electronic device transmits a signal and an electronic device executes a function corresponding to a received signal according to an embodiment of the present disclosure;
FIG. 3 is a flowchart illustrating a process for transmitting a signal to an electronic device by a wearable electronic device according to an embodiment of the present disclosure;
FIG. 4 is a flowchart illustrating a process in which an electronic device executes a function in response to a signal received from a wearable electronic device according to an embodiment of the present disclosure;
FIG. 5 is a view illustrating an example in which an electronic device outputs a warning according to an embodiment of the present disclosure; and
FIG. 6 is a flowchart illustrating a process for generating information corresponding to a signal in FIG. 4 according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, the expression "include" or "may include" refers to the existence of a corresponding function, operation, or element, and does not limit one or more additional functions, operations, or elements. The terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In the present disclosure, the expression "or" includes any or all combinations of words enumerated together. For example, the expression "A or B" may include A, may include B, or may include both A and B.

In the present disclosure, expressions including ordinal numbers, such as "first" and "second,' etc., may modify various elements. However, such elements are not limited by the above expressions. For example, the above expressions do not limit the sequence and/or importance of the elements. The above expressions are used merely for the purpose of distinguishing an element from the other elements. For example, a first user device and a second user device indicate different user devices although both of them are user devices. For example, a first element could be termed a second element, and similarly, a second element could be also termed a first element without departing from the scope of the present disclosure.

In the case where an element is referred to as being "connected to" or "accessed by" other elements, it should be understood that not only the element is directly connected or accessed to the other elements, but also another element may exist between them. Contrarily, when an element is referred to as being "directly coupled" or "directly connected" to any other element, it should be understood that no element is interposed therebetween.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present specification.

A wearable electronic device according to various embodiments of the present disclosure is an electronic device that can be worn on a user's body so as to support the user's physical activities, and can wirelessly communicate with other electronic devices by including a Bluetooth (BT) communication device, a near field communication (NFC) device, a Wi-Fi direct communication device, and a wireless access point (AP) capable of wireless connection. Further, the wearable electronic device may include a motion sensor such as an acceleration sensor so as to sense the motion state of the wearable electronic device. A hearing aid that can output sound for compensating for a user's hearing loss so as to allow the user to clearly hear sound which is inaudible to the user due to the hearing loss may be representative of the wearable electronic device that can be worn on a user's body so as to support the user's physical activities. However, the present disclosure is not limited thereto, and may include a wearable electronic device that is a companion device including a motion sensor for sensing the motion state of the device and capable of being connected to the electronic device by a communication session. Such a wearable electronic device may be implemented in the form of a watch, glasses, a head-mounted display, an earphone, a necklace, shoes, a waist belt, an ankle band, a band, or the like.

An electronic device according to various embodiments of the present disclosure may be a device with a communication function. For example, the electronic device may include at least one of a smartphone, a tablet personal computer (PC), a mobile phone, a video phone, an electronic book (e-book) reader, a desktop PC, a laptop PC, a netbook computer, a personal digital assistant (PDA), a portable multimedia player (PMP), a Moving Picture Experts Group phase 1 or phase 2 (MPEG-1 or MPEG-2) audio layer 3 (MP3) player, a mobile medical appliance, a camera, and a wearable device (e.g., a head-mounted-device (HMD) such as electronic glasses, electronic clothes, an electronic bracelet, an electronic necklace, an electronic appcessory, electronic tattoos, or a smart watch).

According to various embodiments of the present disclosure, the electronic device may be a smart home appliance with a communication function. The smart home appliances may include at least one of, for example, televisions (TVs), digital versatile disc (DVD) players, audio players, refrigerators, air conditioners, cleaners, ovens, microwaves, washing machines, air purifiers, set-top boxes, TV boxes (e.g., HomeSync^{™} of Samsung, Apple TV^{™}, or Google TV^{™}), game consoles, electronic dictionaries, electronic keys, camcorders, or electronic frames.

According to various embodiments of the present disclosure, the electronic device may include at least one of various medical devices such as a magnetic resonance angiography (MRA) scanner, a magnetic resonance imaging (MRI) scanner, a computed tomography (CT) scanner, a scanner, an ultra-sonograph, or the like, a navigation device, a global positioning system (GPS) receiver, an event data recorder (EDR), a flight data recorder (FDR), a vehicle infotainment device, an electronic equipment for a ship (for example a ship navigation device and gyro-compass and the like), avionics, a security device, a head unit for vehicle, an industrial or household robot, automatic teller machine (ATM) in banking facilities or point of sales (POS) in stores.

According to various embodiments of the present disclosure, the electronic device may include at least one of a part of furniture or a building/structure having a communication function, an electronic board, an electronic signature receiving device, a projector, and various kinds of measuring instruments (e.g., a water meter, an electric meter, a gas meter, a radio wave meter, and the like). An electronic device according to various embodiments of the present disclosure may be a combination of one or more of above described various devices. Also, an electronic device according to various embodiments of the present disclosure may be a flexible device. Also, an electronic device according to various embodiments of the present disclosure is not limited to the above described devices.

Hereinafter, an electronic device according to various embodiments will be described with reference to the accompanying drawings. The term "user" used in various embodiments may refer to a person who uses an electronic device or a device (for example, an artificial intelligence electronic device) that uses an electronic device

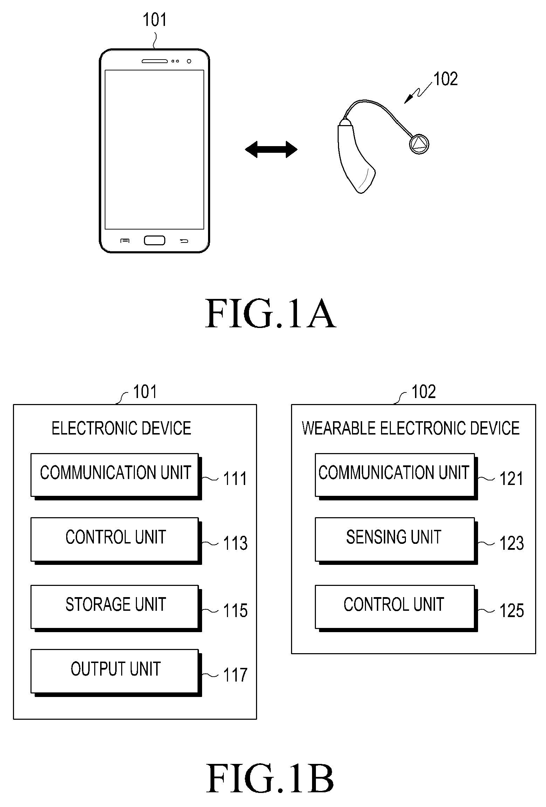

FIGS. 1A and 1B are an exemplified view and a block diagram illustrating an electronic device and a wearable electronic device having a communication session established with the electronic device according to various embodiments of the present disclosure.

Referring to FIGS. 1A and 1B, a wearable electronic device 102 is a companion electronic device having a communication session established with an electronic device 101. The wearable electronic device 102 may include a communication unit 121, a sensing unit 123, and a control unit 125, and may establish a communication session with the electronic device 101. When the wearable electronic device 102 has the communication session established with the electronic device 101, the wearable electronic device 102 may sense a state thereof, and may transmit, to the electronic device 101, a signal according to a change in the state thereof. Also, the electronic device 101 may include a communication unit 111, a control unit 113, a storage unit 115, and an output unit 117, and may establish a communication session with the wearable electronic device 102. When the electronic device 101 has the communication session established with the wearable electronic device 102, the electronic device 101 may store information including the location of generation of a signal received from the wearable electronic device 102, in response to the received signal, and may output the information.

A representative of the wearable electronic device 102, according to various embodiments of the present disclosure, may be a hearing aid that outputs a sound, which is obtained by compensating for the loss of hearing of a user and the user can hear well, with respect to a sound that the user cannot hear well due to the loss of hearing of the user, as illustrated in FIG. 1A. Examples of the companion electronic device having the communication session established with the electronic device 101 may be implemented in the form of a wristwatch, glasses, an HMD, an earphone, a necklace, shoes, a waist belt, an ankle band, a band, and the like.

According to an embodiment of the present disclosure, the communication unit 121 of the wearable electronic device 102 may establish a communication session with the electronic device 101, and may perform data communication with the electronic device 101. For example, the communication unit 121 may be connected to a network through wireless communication, and may communicate with the electronic device 101. The wireless communication may be performed according to, for example, at least one of Wi-Fi, BT, NFC, a GPS, and cellular communication (e.g., long term evolution (LTE), LTE-advanced (LTE-A), code division multiple access (CDMA), wideband CDMA (WCDMA), universal mobile telecommunications system (UMTS), wireless broadband (WiBro), global system for mobile communications (GSM), or the like). Also, the communication unit 121 may support wired communication which may be performed according to, for example, at least one of a universal serial bus (USB), a high definition multimedia interface (HDMI), recommended standard 232 (RS-232), and a plain old telephone service (POTS).

According to an embodiment of the present disclosure, the sensing unit 123 of the wearable electronic device 102 may sense a state of the wearable electronic device 102. For example, the sensing unit 123 may include an acceleration sensor, and may sense a change in the state of the wearable electronic device 102 according to a change in an acceleration value measured by the acceleration sensor. For example, according to a change in the acceleration value measured by the acceleration sensor, the sensing unit 123 may distinguish between and may sense a state in a case where the user is wearing or carrying the wearable electronic device 102, and a state in a case where the user has taken off the wearable electronic device 102 and the wearable electronic device 102 is placed in/on a locker, a table, or the like. Also, the sensing unit 123 may include at least one biometric sensor, and may sense a biometric signal (e.g., a blood pressure, a blood flow, a heart rate, a body temperature, a breathing rate, heart and lung sounds, an electromyography (EMG), an electrocardiogram (ECG), etc.) of the user who wears the wearable electronic device 102. Examples of the biometric sensor that senses a biometric signal may include at least one or more of an acceleration sensor, a heart rate variability (HRV) sensor, a heart rate monitor (HRM) sensor, an EMG sensor, an electroencephalogram (EEG) sensor, an ECG sensor, an infrared (IR) sensor, and an E-nose sensor.

According to an embodiment of the present disclosure, the control unit 125 of the wearable electronic device 102 may control an overall operation of the wearable electronic device 102, and may control operations of the other elements (e.g., the communication unit 121, the sensing unit 123, etc.).

The control unit 125 may control the communication unit 121 to transmit a signal according to the state change of the wearable electronic device 102, which has been sensed by the sensing unit 123, to the electronic device 101 having a communication session established with the wearable electronic device 102.

In an embodiment of the present disclosure, the control unit 125 may determine the state change of the wearable electronic device 102, according to a change in the acceleration value measured by the acceleration sensor of the sensing unit 123. For example, when the acceleration value measured by the acceleration sensor is greater than a first threshold, the control unit 125 may determine that the user is in a state of wearing the wearable electronic device 102. In contrast, when the acceleration value measured by the acceleration sensor is not greater than the first threshold, or when the acceleration value is maintained during a pre-designated time period in a state where the acceleration value is not greater than the first threshold, the control unit 125 may determine that the wearable electronic device 102 is changed to a state of non-movement. Since, in this state, the user may not be wearing or may not be carrying the wearable electronic device 102 and is likely to lose the wearable electronic device 102, the control unit 125 may transmit a signal according to the state change of the wearable electronic device 102 to the electronic device 101, which has a communication session established with the wearable electronic device 102 by the communication unit 121. Also, when a difference between the acceleration value measured by the acceleration sensor of the sensing unit 123 and the previous acceleration value is greater than a second threshold, the control unit 125 may determine that the movement of the wearable electronic device 102 has been abnormally quickly changed. Since, in this state, the user is likely to drop and lose or damage the wearable electronic device 102, the control unit 125 may transmit a signal according to the state change of the wearable electronic device 102 to the electronic device 101, which has the communication session established with the wearable electronic device 102 by the communication unit 121. In the present example, the first threshold may signify a reference value for determining that the wearable electronic device 102 is in the state of non-movement, and the second threshold may signify a reference value for determining that the wearable electronic device 102 is in a state of abnormal movement. The first threshold and the second threshold may be variably adjusted.

In an embodiment of the present disclosure, the control unit 125 may determine the state change of the wearable electronic device 102, according to whether a biometric signal is sensed by the at least one biometric sensor of the sensing unit 123. For example, when a biometric signal (e.g., a blood pressure, a blood flow, a heart rate, a body temperature, a breathing rate, heart and lung sounds, an EMG, an ECG, etc.) of the user is sensed by the at least one biometric sensor, the control unit 125 may determine that the user is wearing the wearable electronic device 102. In contrast, when the biometric signal of the user is not sensed by the at least one biometric sensor, the control unit 125 may determine that the user is changed to a state in which the user is not wearing the wearable electronic device 102. Since, in this state, the user does not wear the wearable electronic device 102 and is likely to lose the wearable electronic device 102, the control unit 125 may transmit a signal according to the state change of the wearable electronic device 102 to the electronic device 101, which has the communication session established with the wearable electronic device 102 by the communication unit 121.

Also, the control unit 125 may include an identifier of the wearable electronic device 102 in a signal according to the state change of the wearable electronic device 102, and may transmit the signal including the identifier of the wearable electronic device 102 to the electronic device 101. In this case, the electronic device 101 may confirm the identifier included in the received signal, and may identify the wearable electronic device 102. In addition, the identifier of the wearable electronic device 102 may be used to search for a location of the wearable electronic device 102.

Also, the control unit 125 may include a function of confirming location information of the wearable electronic device 102. For example, the control unit 125 may confirm location information of the wearable electronic device 102 by using a GPS module or a short-range communication module that may be included in the communication module 121. The control unit 125 may confirm the location information of the wearable electronic device 102 by using location information data which is received from a GPS by the GPS module of the communication module 121. Also, the control unit 125 may confirm the location information of the wearable electronic device 102 by using location information data which is received from a wireless local area network by the short-range communication module or a mobile communication module of the communication module 121. Alternatively, the control unit 125 may confirm the location information of the wearable electronic device 102 by using location information data provided by a base station. For example, the control unit 125 may include a Wi-Fi positioning system (WPS) module that confirms location information by using information of a wireless AP received by Wi-Fi, and a cell-based location information providing module that provides cell-based location information of a mobile communication network, and may further include a sensor-based location information providing module that provides location information of the wearable electronic device 102 by using BT, ZigBee, an infrared sensor, an ultrasonic sensor, a radio frequency identification (RFID) sensor, and the like. In this case, the control unit 125 may include location information of the wearable electronic device 102 in a signal according to the state change of the wearable electronic device 102. Accordingly, the electronic device 101 may confirm the location information included in the received signal, and may determine a location at which the signal from the wearable electronic device 102 has been generated.

Also, the control unit 125 may include at least one of a communication session release indication and a device cooperation release indication in a signal according to the state change of the wearable electronic device 102. In this regard, the wearable electronic device 102 may receive a telephone call, a message, an alarm, a warning, and the like from the electronic device 101 through device cooperation (e.g., an audio pass-through function) with the electronic device 101. Also, when the signal according to the state change of the wearable electronic device 102 has been generated, the wearable electronic device 102 may be in a state where the use of the wearable electronic device 102 is stopped, and thus may release an unnecessary communication session or unnecessary device cooperation with the electronic device 101. For example, when it is sensed (or determined) that the use of the wearable electronic device 102 is stopped, the control unit 125 may transmit, to the electronic device 101, a signal including a communication session release indication, which indicates the release of the communication session with the electronic device 101, and may release the communication session with the electronic device 101, and may automatically cut off the device cooperation together with the release of the communication session. Further, when it is sensed that the use of the wearable electronic device 102 is stopped, the control unit 125 may transmit, to the electronic device 101, a signal including a device cooperation release indication, which indicates the release of the device cooperation with the electronic device 101, and may release only the device cooperation in a state where the communication session with the electronic device 101 is maintained. Accordingly, while the use of the wearable electronic device 102 is stopped, the wearable electronic device 102 may release the device cooperation with the electronic device 101 and may not receive a telephone call, a message, an alarm, a warning, and the like from the electronic device 101, and does not have to maintain the communication session, so that it is advantageous that power of a battery of the wearable electronic device 102 can be saved. Meanwhile, when a state change of the wearable electronic device 102 is re-sensed, the wearable electronic device 102 may transmit, to the electronic device 101, a communication session establishment indication or a device cooperation establishment indication, may establish a communication session with the electronic device 101, and may resume device cooperation with the electronic device 101.

Examples of the electronic device 101 according to various embodiments of the present disclosure may include various electronic devices, each of which may perform data communication, may receive a signal according to a state change of the wearable electronic device 102 from the wearable electronic device 102 having a communication session established with the electronic device 101, and may perform an optional operation. Examples of electronic device 101 may include a smart phone, a mobile phone, a laptop computer, an air conditioner, a washing machine, a refrigerator, a note PC, a tablet PC, a smart TV, and the like.

According to an embodiment of the present disclosure, the communication unit 111 of the electronic device 101 may establish communication between the electronic device 101 and an external device. For example, the communication unit 111 may be connected to a network through wireless communication or wired communication and may communicate with the external device. The wireless communication may be performed according to, for example, at least one of Wi-Fi, BT, NFC, GPS, and cellular communication (e.g., LTE, LTE-A, CDMA, WCDMA, UMTS, WiBro, GSM, or the like). The wired communication may be performed according to, for example, at least one of USB, HDMI, RS-232, and POTS.

According to an embodiment of the present disclosure, the storage unit 115 of the electronic device 101 may store commands or data which are received from the communication unit 111, the control unit 113, and the output unit 117, or which are generated by the other elements. The storage unit 115 may include programming modules, such as a kernel, middleware, an application programming interface (API), an application, and/or the like. Each of the above-described programming modules may be implemented in software, firmware, hardware, or a combination of at least two thereof. The storage unit 115 may store information including the location of generation of a signal from the wearable electronic device 102 that the control unit 113 has generated in response to the signal according to a state change of the wearable electronic device 102 from the wearable electronic device 102. In the present example, the information may further include time information on a time point of receiving a signal from the wearable electronic device 102.

According to an embodiment of the present disclosure, the output unit 117 of the electronic device 101 may output various warnings (e.g., a sound, a vibration, a pop-up window, etc.) to the user. For example, the output unit 117 may output an image, data, information, text, and the like to the user through the display so as to be viewed, may output a sound (e.g., a warning sound) to the user through a speaker so as to be heard, and may output a vibration through a vibration motor so that the user can tactilely recognize the vibration.

According to an embodiment of the present disclosure, the control unit 113 of the electronic device 101 may control an overall operation of the electronic device 101, may process at least one piece of information among pieces of information acquired from the other elements (e.g., the communication unit 111, the storage unit 115, the output unit 117, etc.), and may provide the processed information to the user in various methods. For example, the control unit 113 may control at least some functions of the electronic device 101 so that the electronic device 101 may operate in cooperation with another electronic device.

The control unit 113 may generate information including the location of generation of a signal from the wearable electronic device 102, in response to the signal according to the state change of the wearable electronic device 102 received from the wearable electronic device 102 through the communication unit 111, may store the generated information in the storage unit 115, and may control such that a warning corresponding to the generated information is output. At this time, the information may further include time information on a time point of receiving the signal from the wearable electronic device 102. Also, when a signal has been received from the wearable electronic device 102, the control unit 113 may confirm the received signal, and may control such that processing corresponding to the received signal may be performed. For example, when a signal received from the wearable electronic device 102 is a signal representing that the movement of the wearable electronic device 102 has been abnormally quickly changed, the control unit 113 may control the output unit 117 to output a danger warning of the wearable electronic device 102. Further, when the signal received from the wearable electronic device 102 is a signal representing that the wearable electronic device 102 is changed to a state of non-movement, the control unit 113 may generate and store information including location information on the location of generation of the signal and time information on a time point of receiving the signal. Such a configuration can help the user to find the wearable electronic device 102 when the wearable electronic device 102 that has transmitted the signal is lost.

Also, the control unit 113 may include a function of confirming location information of the electronic device 101. For example, the control unit 113 may confirm location information of the electronic device 101 by using a GPS module or a short-range communication module that may be included in the communication unit 111. The control unit 113 may confirm location information of the electronic device 101 by using location information data which is received from a GPS by the GPS module of the communication unit 111. Also, the control unit 113 may confirm the location information of the electronic device 101 by using location information data which is received from a wireless local area network by the short-range communication module or a mobile communication module of the communication module 111. Alternatively, the control unit 113 may confirm the location information of the electronic device 101 by using location information data provided by a base station. For example, the control unit 113 may include a WPS module that confirms location information by using information of a wireless AP received by Wi-Fi, and a cell-based location information providing module that provides cell-based location information of a mobile communication network, and may further include a sensor-based location information providing module that provides location information of the electronic device 101 by using BT, ZigBee, an infrared sensor, an ultrasonic sensor, an RFID sensor, and the like. When a signal according to a state change of the wearable electronic device 102 is received from the wearable electronic device 102 through these functions, the control unit 113 may determine that location information of the electronic device 101 is the location of generation of the signal from the wearable electronic device 102, and may include the location information in information of the wearable electronic device 102.

Also, the control unit 113 may include a function capable of searching for a location of an external device (e.g., the wearable electronic device 102) having a communication session established with the electronic device 101. For example, the control unit 113 may search for a distance between the electronic device 101 and the wearable electronic device 102, or a location of the wearable electronic device 102 by using communication intensity between the electronic device 101 and the wearable electronic device 102 that has a communication session established with the electronic device 101 by the communication unit 111. When a signal according to a state change of the wearable electronic device 102 is received from the wearable electronic device 102 through this function, the control unit 113 may search for a location of the wearable electronic device 102 that has transmitted the signal, may determine that the found location is the location of generation of the signal from the wearable electronic device 102, and may include the found location in information of the wearable electronic device 102. At this time, the signal received from the wearable electronic device 102 may include an identifier of the wearable electronic device 102. The control unit 113 may confirm the identifier of the wearable electronic device 102 which is included in the signal, may search for a location corresponding to the confirmed identifier, and thereby may search for the location of the wearable electronic device 102. Meanwhile, the signal transmitted by the wearable electronic device 102 may include location information of the wearable electronic device 102. In this case, the control unit 113 may confirm the location information of the wearable electronic device 102 which is included in the signal, may determine that the confirmed location information is the location of generation of the signal from the wearable electronic device 102, and may include the confirmed location information in information of the wearable electronic device 102.

Also, when the signal according to the state change of the wearable electronic device 102 has been received from the wearable electronic device 102 and information of the wearable electronic device 102 is generated in response to the signal, the control unit 113 may control the output unit 117 to output a warning corresponding to the generated information. At this time, the warning which is output by the output unit 117 may be output in the form of at least one of a sound, a vibration, and a pop-up window. Also, the control unit 113 may set an output of the warning to depend on a distance between the electronic device 101 and the wearable electronic device 102, through a function capable of confirming the distance between the electronic device 101 and the wearable electronic device 102 having a communication session established with the electronic device 101. For example, when the distance between the electronic device 101 and the wearable electronic device 102 is short, the magnitude of the warning (i.e., a sound, a vibration, or a pop-up window) may be set to be small, or the output of the warning may be omitted, and only information may be recorded in the storage unit 115. In contrast, when the distance between the electronic device 101 and the wearable electronic device 102 is long, the magnitude of the warning (i.e., a sound, a vibration, or a pop-up window) may be set to be large, so as to enable the user to confirm a state change of the wearable electronic device 102 within a short time period.

Further, when the signal received from the wearable electronic device 102 includes a communication session release indication or a device cooperation release indication, the control unit 113 may release the communication session with the wearable electronic device 102, or may release only device cooperation in a state of maintaining the communication session. In this regard, the electronic device 101 may deliver a telephone call, a message, an alarm, a warning, and the like to the wearable electronic device 102 through the device cooperation (e.g., an audio pass-through function) with the wearable electronic device 102, and the wearable electronic device 102 may be in a state where the use of the wearable electronic device 102 is stopped when a signal according to a state change of the wearable electronic device 102 has been generated. Accordingly, the signal received from the wearable electronic device 102 may include the communication session release indication or the device cooperation release indication in order to release an unnecessary communication session or unnecessary device cooperation with the wearable electronic device 102. For example, when the signal according to the state change of the wearable electronic device 102 includes a communication session release indication, the control unit 113 may release the communication session with the wearable electronic device 102, and thereby may cause the device cooperation to be automatically cut off together with the release of the communication session. Also, when the signal according to the state change of the wearable electronic device 102 includes a device cooperation release indication, the control unit 113 may release only the device cooperation in a state of maintaining the communication session with the wearable electronic device 102. Accordingly, while the use of the wearable electronic device 102 is stopped, the electronic device 101 may release the device cooperation with the wearable electronic device 102 and thereby may prevent a telephone call, a message, an alarm, a warning, and the like from being delivered to the wearable electronic device 102, and may not have to maintain the communication session, so that power of the battery of the electronic device 101 can be saved. Meanwhile, when a state change of the wearable electronic device 102 is re-sensed, the electronic device 101 may receive a communication session establishment indication or a device cooperation establishment indication from the wearable electronic device 102. Accordingly, the electronic device 101 may establish a communication session with the wearable electronic device 102, and may resume device cooperation with the wearable electronic device 102.

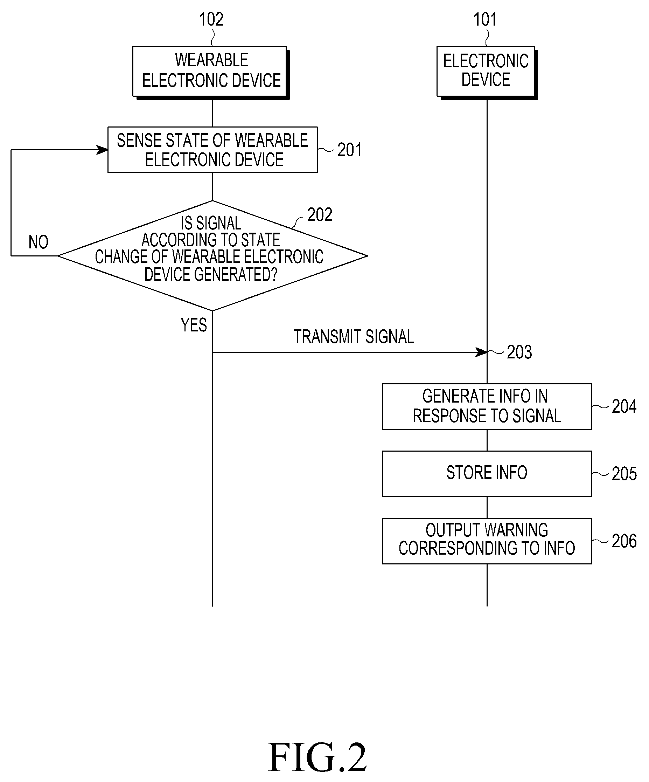

FIG. 2 is a signal flow diagram illustrating a process in which a wearable electronic device transmits a signal and an electronic device executes a function corresponding to a received signal according to an embodiment of the present disclosure.

Hereinafter, a process in which the wearable electronic device transmits a signal and the electronic device executes a function corresponding to a received signal according to an embodiment of the present disclosure will be described with reference to FIG. 2.

Referring to FIG. 2, the wearable electronic device 102 may sense a state thereof in operation 201. The wearable electronic device 102 may include an acceleration sensor capable of sensing a movement state of the wearable electronic device 102, and may sense a movement degree thereof. For example, according to a change in an acceleration value measured by the acceleration sensor, the wearable electronic device 102 may distinguish between and may sense a state in a case where the user is wearing or carrying the wearable electronic device 102, and a state in a case where the user has taken off the wearable electronic device 102 and the wearable electronic device 102 is placed in/on a locker, a table, or the like. Also, the wearable electronic device 102 may include at least one biometric sensor capable of sensing whether the user wears the wearable electronic device 102, and may sense a biometric signal (e.g., a blood pressure, a blood flow, a heart rate, a body temperature, a breathing rate, heart and lung sounds, an EMG, an ECG, etc.) of the user who wears the wearable electronic device 102. Examples of the biometric sensor that senses a biometric signal may include at least one or more of an acceleration sensor, an HRV sensor, an HRM sensor, an EMG sensor, an EEG sensor, an ECG sensor, an IR sensor, and an E-nose sensor.

In operation 202, the wearable electronic device 102 may generate a signal according to a state change of the wearable electronic device 102. As an example, the wearable electronic device 102 may determine the state change of the wearable electronic device 102, according to a change in the acceleration value measured by the acceleration sensor. For example, when the acceleration value measured by the acceleration sensor is greater than a first threshold, the wearable electronic device 102 may determine that the user is in a state of wearing the wearable electronic device 102, and may continuously sense the state of the wearable electronic device 102 in operation 201. When the acceleration value measured by the acceleration sensor is not greater than the first threshold, or when the acceleration value is maintained during a pre-designated time period in a state where the acceleration value is not greater than the first threshold, the wearable electronic device 102 may determine that the wearable electronic device 102 is changed to a state of non-movement. Since, in this state, the user may not be wearing or may not be carrying the wearable electronic device 102 and is likely to lose the wearable electronic device 102, the wearable electronic device 102 may transmit a signal according to the state change of the wearable electronic device 102 to the electronic device 101 having a communication session established with the wearable electronic device 102, in operation 203. Also, when a difference between the acceleration value measured by the acceleration sensor and the previous acceleration value is greater than a second threshold, the wearable electronic device 102 may determine that the movement of the wearable electronic device 102 has been abnormally quickly changed. Since, in this state, the user is likely to drop and lose or damage the wearable electronic device 102, the wearable electronic device 102 may transmit a signal according to the state change of the wearable electronic device 102 to the electronic device 101, which has the communication session established with the wearable electronic device 102, in operation 203. In the present example, the first threshold may signify a reference value for determining that the wearable electronic device 102 is in the state of non-movement, and the second threshold may signify a reference value for determining that the wearable electronic device 102 is in a state of abnormal movement. The first threshold and the second threshold may be variably adjusted.

As another example, when the wearable electronic device 102 senses a biometric signal (e.g., a blood pressure, a blood flow, a heart rate, a body temperature, a breathing rate, heart and lung sounds, an EMG, an ECG, etc.) of the user through the at least one biometric sensor, the wearable electronic device 102 may determine that the user is wearing the wearable electronic device 102. Then, the wearable electronic device 102 may continuously sense the state thereof in operation 201. In contrast, when the biometric signal of the user is not sensed by the at least one biometric sensor, the wearable electronic device 102 may determine that the user is changed to a state in which the user is not wearing the wearable electronic device 102. Since, in this state, the user does not wear the wearable electronic device 102 and is likely to lose the wearable electronic device 102, the wearable electronic device 102 may transmit a signal according to the state change of the wearable electronic device 102 to the electronic device 101 having the communication session established with the wearable electronic device 102, in operation 203.

When the electronic device 101 has received the signal according to the state change of the wearable electronic device 102 from the wearable electronic device 102 in operation 203, the electronic device 101 may generate information including the location of generation of the signal from the wearable electronic device 102 in response to the signal in operation 204, and may store the generated information in operation 205. At this time, the information may further include time information on a time point of receiving the signal from the wearable electronic device 102. For example, the electronic device 101 may generate, in real time, information including the time information on the time point of receiving the signal from the wearable electronic device 102 and the location information of the generation of the signal, in response to the signal, and may store the generated information.

As an example, the electronic device 101 may include a function of confirming location information thereof. For example, the electronic device 101 may confirm location information thereof by using the GPS module or the short-range communication module. For example, the electronic device 101 may confirm the location information thereof by using location information data which is received from a GPS by the GPS module. Alternatively, the electronic device 101 may confirm the location information thereof by using location information data which is received from a wireless local area network by the short-range communication module or the mobile communication module. Alternatively, the electronic device 101 may confirm the location information thereof by using location information data provided by a base station. The electronic device 101 may determine that the confirmed location information of the electronic device 101 is the location of generation of the signal received from the wearable electronic device 102 which corresponds to the received signal, and may include the confirmed location information in information of the wearable electronic device 102.

As another example, the electronic device 101 may include a function capable of searching for a location of the wearable electronic device 102 having the communication session established with the electronic device 101. For example, the electronic device 101 may search for a distance between the electronic device 101 and the wearable electronic device 102, or a location of the wearable electronic device 102 by using communication intensity between the electronic device 101 and the wearable electronic device 102 having a communication session established with the electronic device 101. The electronic device 101 may determine that the found location information of the wearable electronic device 102 is the location of generation of the signal received from the wearable electronic device 102 which corresponds to the received signal, and may include the found location information in information of the wearable electronic device 102. At this time, the signal received from the wearable electronic device 102 may include an identifier which enables the identification of the wearable electronic device 102.

As still another example, when the signal received from the wearable electronic device 102 includes location information of the wearable electronic device 102, the electronic device 101 may determine that the location information of the wearable electronic device 102 included in the signal is the location of generation of the received signal which corresponds to the signal received from the wearable electronic device 102, and may include the location information of the wearable electronic device 102, which is included in the signal, in information of the wearable electronic device 102.

In operation 206, the electronic device 101 may output a warning corresponding to the generated information. The electronic device 101 may output the warning in the form of at least one of a sound, a vibration, and a pop-up window. At this time, the electronic device 101 may set an output of the warning to depend on a distance between the electronic device 101 and the wearable electronic device 102. For example, when the distance between the electronic device 101 and the wearable electronic device 102 is short, the electronic device 101 may output the warning having small intensity, or may omit the output of the warning. In contrast, when the distance between the electronic device 101 and the wearable electronic device 102 is long, the electronic device 101 may output the warning having large intensity, and enables the user to immediately recognize the warning.

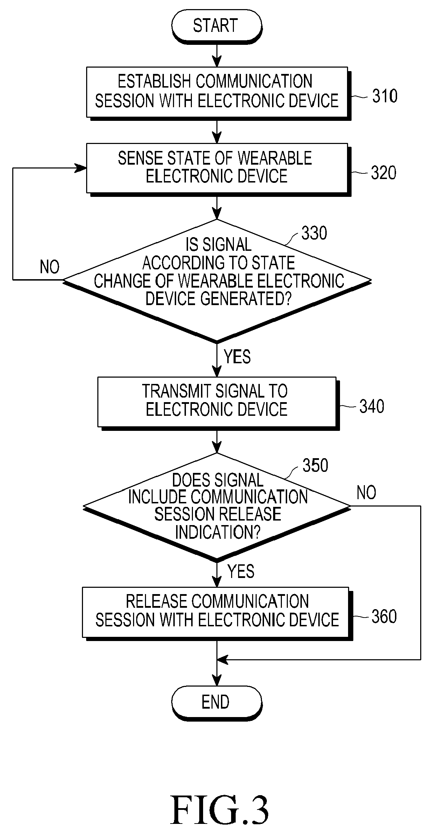

FIG. 3 is a flowchart illustrating a process for transmitting a signal to an electronic device by a wearable electronic device according to an embodiment of the present disclosure.

Hereinafter, a process for transmitting a signal to the electronic device by the wearable electronic device according to an embodiment of the present disclosure will be described with reference to FIG. 3.

Referring to FIG. 3, the wearable electronic device 102 may establish a communication session with the at least one electronic device 101 in operation 310. The wearable electronic device 102 may establish the communication session with the electronic device 101 according to at least one of Wi-Fi, BT, NFC, GPS, and cellular communication (e.g., LTE, LTE-A, CDMA, WCDMA, UMTS, WiBro, GSM, or the like), and may maintain the communication session.

In operation 320, the wearable electronic device 102 may sense a state thereof. The wearable electronic device 102 may include an acceleration sensor capable of sensing a movement state of the wearable electronic device 102, and may sense a movement degree thereof. For example, according to a change in an acceleration value measured by the acceleration sensor, the wearable electronic device 102 may distinguish between and may sense a state in a case where the user is wearing or carrying the wearable electronic device 102, and a state in a case where the user has taken off the wearable electronic device 102 and the wearable electronic device 102 is placed in/on a locker, a table, or the like. Also, the wearable electronic device 102 may include at least one biometric sensor capable of sensing whether the user wears the wearable electronic device 102, and may sense a biometric signal (e.g., a blood pressure, a blood flow, a heart rate, a body temperature, a breathing rate, heart and lung sounds, an EMG, an ECG, etc.) of the user who wears the wearable electronic device 102. Examples of the biometric sensor that senses a biometric signal may include at least one or more of an acceleration sensor, an HRV sensor, an HRM sensor, an EMG sensor, an EEG sensor, an ECG sensor, an IR sensor, and an E-nose sensor.

In operation 330, the wearable electronic device 102 may generate a signal according to a state change thereof while the wearable electronic device 102 senses the state thereof. For example, the wearable electronic device 102 may determine whether the acceleration value measured by the acceleration sensor is not greater than a first threshold, or whether the acceleration value is maintained during a pre-designated time period in a state where the acceleration value is not greater than the first threshold, or may determine whether a difference between the acceleration value measured by the acceleration sensor and the previous acceleration value is greater than a second threshold, and thereby may sense the state change of the wearable electronic device 102. Alternatively, the wearable electronic device 102 may sense the state change thereof, according to whether a biometric signal (e.g., a blood pressure, a blood flow, a heart rate, a body temperature, a breathing rate, heart and lung sounds, an EMG, an ECG, etc.) of the user is sensed by the at least one biometric sensor.

In operation 340, the wearable electronic device 102 may transmit a signal according to the state change thereof to the electronic device 101.

For example, when the acceleration value measured by the acceleration sensor is greater than the first threshold, the wearable electronic device 102 may determine that the user is in a state of wearing the wearable electronic device 102, and may continuously sense the state of the wearable electronic device 102 in operation 320. When the measured acceleration value is not greater than the first threshold, or when the measured acceleration value is maintained during a pre-designated time period in a state where the measured acceleration value is not greater than the first threshold, the wearable electronic device 102 may determine that the wearable electronic device 102 is changed to a state of non-movement. Since, in this state, the user may not be wearing or may not be carrying the wearable electronic device 102 and is likely to lose the wearable electronic device 102, the wearable electronic device 102 may generate a signal according to the state change of the wearable electronic device 102 in operation 330, and may transmit the generated signal to the electronic device 101, which has a communication session established with the wearable electronic device 102, in operation 340. Also, when a difference between the acceleration value measured by the acceleration sensor and the previous acceleration value is greater than the second threshold, the wearable electronic device 102 may determine that the movement of the wearable electronic device 102 has been abnormally quickly changed. Since, in this state, the user is likely to drop and lose or damage the wearable electronic device 102, the wearable electronic device 102 may generate a signal according to the state change of the wearable electronic device 102 in operation 330, and may transmit the generated signal to the electronic device 101, which has the communication session established with the wearable electronic device 102, in operation 340. Alternatively, when a biometric signal (e.g., a blood pressure, a blood flow, a heart rate, a body temperature, a breathing rate, heart and lung sounds, an EMG, an ECG, etc.) of the user is sensed by the at least one biometric sensor, the wearable electronic device 102 may determine that the user is in a state of wearing the wearable electronic device 102, and may continuously sense the state of the wearable electronic device 102 in operation 320. In contrast, when the biometric signal of the user is not sensed by the at least one biometric sensor, the wearable electronic device 102 may determine that the user is changed to a state in which the user is not wearing the wearable electronic device 102. Since, in this state, the user does not wear the wearable electronic device 102 and is likely to lose the wearable electronic device 102, the wearable electronic device 102 may generate a signal according to the state change of the wearable electronic device 102 in operation 330, and may transmit the generated signal to the electronic device 101, which has the communication session established with the wearable electronic device 102, in operation 340.

The wearable electronic device 102 may include a communication session release indication in the signal according to the state change of the wearable electronic device 102, in operation 350. In this regard, the wearable electronic device 102 may receive a telephone call, a message, an alarm, a warning, and the like from the electronic device 101 through device cooperation (e.g., an audio pass-through function) with the electronic device 101. When the signal according to the state change of the wearable electronic device 102 has been generated, the wearable electronic device 102 may be in a state where the use of the wearable electronic device 102 is stopped. Accordingly, the communication session release indication may be included in the signal according to the state change of the wearable electronic device 102 in order to release an unnecessary communication session with the electronic device 101. As another example, the wearable electronic device 102 may include a device cooperation release indication in the signal according to the state change of the wearable electronic device 102, which is for releasing unnecessary device cooperation with the electronic device 101.

When the signal according to the state change of the wearable electronic device 102 includes a communication session release indication, the wearable electronic device 102 may release the communication session with the electronic device 101 in operation 360. In this case, the wearable electronic device 102 may release the communication session with the electronic device 101, and thereby may cause the device cooperation to be automatically cut off together with the release of the communication session. As another example, when the signal according to the state change of the wearable electronic device 102 includes a device cooperation release indication, the wearable electronic device 102 may release only the device cooperation in a state of maintaining the communication session with the electronic device 101. Accordingly, while the use of the wearable electronic device 102 is stopped, the wearable electronic device 102 may release the device cooperation with the electronic device 101 and thereby may not receive a telephone call, a message, an alarm, a warning, and the like from the electronic device 101, and may not have to maintain the communication session, so that power of the battery of the wearable electronic device 102 can be saved. Meanwhile, when a state change of the wearable electronic device 102 is re-sensed, the wearable electronic device 102 may transmit a communication session establishment indication or a device cooperation establishment indication to the electronic device 101. Accordingly, the wearable electronic device 102 may establish a communication session with the electronic device 101, and may resume device cooperation with the electronic device 101.

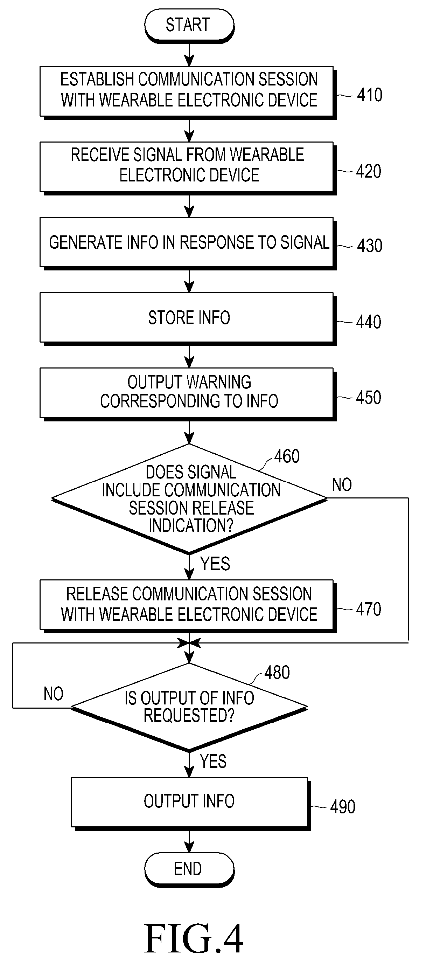

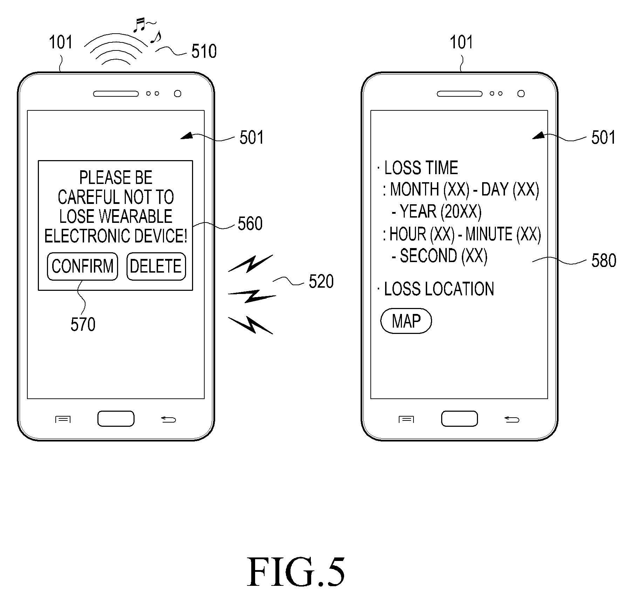

FIG. 4 is a flowchart illustrating a process in which an electronic device executes a function in response to a signal received from a wearable electronic device according to an embodiment of the present disclosure. FIG. 5 is a view illustrating an example in which an electronic device outputs an alarm according to an embodiment of the present disclosure.

Hereinafter, a process in which the electronic device executes a function in response to a signal received from the wearable electronic device according to an embodiment of the present disclosure will be described with reference to FIGS. 4 and 5.

Referring to FIG. 4, the electronic device 101 may be connected to a network through wireless communication or wired communication, and may establish communication with the wearable electronic device 102 in operation 410. In the electronic device 101, the wireless communication may be performed according to at least one of Wi-Fi, BT, NFC, GPS, and cellular communication (e.g., LTE, LTE-A, CDMA, WCDMA, UMTS, WiBro, GSM, or the like), and the wired communication may be performed according to at least one of USB, HDMI, RS-232, and POTS.

In operation 420, the electronic device 101 may receive a signal according to a state change of the wearable electronic device 102, from the wearable electronic device 102.

In operation 430, the electronic device 101 may generate information including the location of generation of a signal received from the wearable electronic device 102 in response to the received signal.

In operation 440, the electronic device 101 may store the information generated in response to the signal.

In operation 450, the electronic device 101 may output a warning corresponding to the generated information. The electronic device 101 may output the warning in the form of at least one of a sound, a vibration, and a pop-up window. At this time, the electronic device 101 may set an output of the warning to depend on a distance between the electronic device 101 and the wearable electronic device 102. For example, when the distance between the electronic device 101 and the wearable electronic device 102 is short, the electronic device 101 may output the warning having small intensity, or may omit the output of the warning. In contrast, when the distance between the electronic device 101 and the wearable electronic device 102 is long, the electronic device 101 may output the warning having large intensity, and enables the user to immediately recognize the warning.

Referring to FIG. 5, the electronic device 101 may output, on a display 501, a warning related to the wearable electronic device 102 in the form of a pop-up window 560, in the form of a sound 510 through a speaker, or in the form of a vibration 520 through a vibration motor. FIG. 5 is a view illustrating an example in which a signal according to a state change of the wearable electronic device 102 represents that the wearable electronic device 102 is in a state of non-movement or a state where the user does not wear the wearable electronic device 102, the electronic device 101 recognizes that the wearable electronic device 102 is likely to be lost, and outputs the warning which enables the user to subsequently find a location of loss of the wearable electronic device 102 by using the location of generation of the signal. In the pop-up window 560, a confirmation button 570 may be disposed which allows the user, who confirms the warning related to the wearable electronic device 102, to request the output of a time point and a location of generation of the signal in preparation for the loss of the wearable electronic device 102 which are information generated in response to the signal from the wearable electronic device 102. When the user touches the confirmation button 570, the electronic device 101 may output, on the display 501, an information providing screen 580 that provides the information. Time information on a time point of receiving the signal from the wearable electronic device 102 and location information on the location of generation of the signal (i.e., a time point and a location at which the wearable electronic device 102 may be presumed to be lost) may be provided on the information providing screen 580 at this time. In the case of location information, a function of the electronic device 101 itself or a separate map application enables the user to confirm the location information through a map.

In operation 460, the electronic device 101 may determine whether the signal according to the state change of the wearable electronic device 102 includes a communication session release indication. When the signal according to the state change of the wearable electronic device 102 has been generated, the wearable electronic device 102 may be in a state where the use of the wearable electronic device 102 is stopped. Accordingly, the determination in operation 460 is for releasing an unnecessary communication session with the electronic device 101.

When the signal according to the state change of the wearable electronic device 102 includes the communication session release indication, the electronic device 101 may release the communication session with the wearable electronic device 102 in operation 470. In this case, the electronic device 101 may release the communication session with the wearable electronic device 102, and thereby may cause device cooperation to be automatically cut off together with the release of the communication session. As another example, when the signal according to the state change of the wearable electronic device 102 includes a device cooperation release indication, the electronic device 101 may release only the device cooperation in a state where the communication session with the wearable electronic device 102 is maintained. Accordingly, while the use of the wearable electronic device 102 is stopped, the electronic device 101 may release the device cooperation with the wearable electronic device 102 and thereby may prevent a telephone call, a message, an alarm, a warning, and the like from being delivered to the wearable electronic device 102, and may not have to maintain the communication session, so that power of the battery of the electronic device 101 can be saved. Meanwhile, when a state change of the wearable electronic device 102 is re-sensed, the electronic device 101 may receive a communication session establishment indication or a device cooperation establishment indication from the wearable electronic device 102. Accordingly, the electronic device 101 may establish a communication session with the wearable electronic device 102, and may resume device cooperation with the wearable electronic device 102.

In operation 480, the electronic device 101 may determine whether a request for confirming the location of the wearable electronic device 102 is made through the confirmation button 570 of the pop-up window 560, or whether the output of information of the wearable electronic device 102 is requested through an application provided to be capable of viewing a record on the information corresponding to the signal according to the state change of the wearable electronic device 102.

In operation 490, the electronic device 101 may output the information on the display in response to the request for the output of the information. At this time, the information, such as the time information on the time point of receiving the signal from the wearable electronic device 102 and the location information on the location of generation of the signal (i.e., the information on the time point and the location at which the wearable electronic device 102 may be presumed to be lost), may be provided as illustrated in the right view of FIG. 5. In the case of location information, a function of the electronic device 101 itself or a separate map application enables the user to confirm the location information through a map.

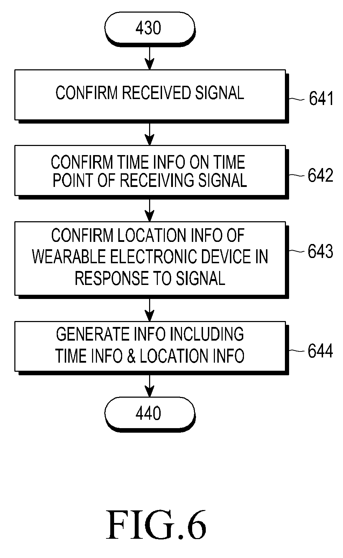

FIG. 6 is a flowchart illustrating a process for generating information corresponding to a signal in FIG. 4 according to an embodiment of the present disclosure. Hereinafter, a process for generating information corresponding to a signal will be described with reference to FIG. 6.

Referring to FIG. 6, the electronic device 101 may confirm a signal received from the wearable electronic device 102 in operation 641.

In operation 642, the electronic device 101 may confirm time information on a time point of receiving the signal.

In operation 643, the electronic device 101 may confirm the location of generation of the signal from the wearable electronic device 102 in response to the signal. For example, the electronic device 101 may confirm whether the signal includes an identifier for identifying the wearable electronic device 102 and location information of the wearable electronic device 102. That is, the signal may further include information indicating a scheme in which the electronic device 101 sets the location of generation of the signal from the wearable electronic device 102. For example, the signal may direct the electronic device 101 to set location information of the electronic device 101 as the location of generation of the signal from the wearable electronic device 102, may direct the electronic device 101 to search for a location of the wearable electronic device 102 and to set the found location as the location of generation of the signal from the wearable electronic device 102, or may direct the electronic device 101 to receive the location information of the wearable electronic device 102 and to set the received location information as the location of generation of the signal from the wearable electronic device 102.

As an example, when the signal directs the electronic device 101 to set location information of the electronic device 101 as the location of generation of the signal from the wearable electronic device 102, the signal may not include separate information, or may include the identifier of the wearable electronic device 102. The electronic device 101 that has received the above-described signal may set the location of the electronic device 101 itself as the location of generation of the signal from the wearable electronic device 102.

As another example, when the signal directs the electronic device 101 to search for a location of the wearable electronic device 102 and to set the found location as the location of generation of the signal from the wearable electronic device 102, the signal may include the identifier of the wearable electronic device 102 and a direction which directs the electronic device 101 to search for the location of the wearable electronic device 102 on the basis of the identifier. The electronic device 101 that has received the above-described signal may search for a distance between the electronic device 101 and the wearable electronic device 102, or the location of the wearable electronic device 102 by using communication intensity between the electronic device 101 and the wearable electronic device 102. Then, the electronic device 101 may set the found location of the wearable electronic device 102 as the location of generation of the signal from the wearable electronic device 102.

As still another example, when the signal directs the electronic device 101 to set location information of the wearable electronic device 102 as the location of generation of the signal from the wearable electronic device 102, the signal may include the location information of the wearable electronic device 102. The electronic device 101, which has received the above-described signal, may confirm the location information of the wearable electronic device 102 which is included in the signal, and may set the confirmed location information as the location of generation of the signal from the wearable electronic device 102.

In operation 644, in response to the signal, the electronic device 101 may generate information including at least one piece of information among the time information on the time point of receiving the signal and the location information of generation of the signal, as information according to a state change of the wearable electronic device 102.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for communicating with a wearable electronic device by an electronic device, the method comprising:
receiving a signal according to a state change of the wearable electronic device;
storing information including a location of generation of the signal from the wearable electronic device, in response to the received signal; and
outputting a warning corresponding to the information.

2. The method as claimed in claim 1, wherein the outputting of the warning comprises setting an output of the warning to depend on a distance between the electronic device and the wearable electronic device.

3. The method as claimed in claim 1, further comprising releasing a communication session with the wearable electronic device when the signal includes the communication session release indication.

4. The method as claimed in claim 1, further comprising releasing device cooperation with the wearable electronic device when the signal includes the device cooperation release indication.

5. The method as claimed in claim 1, further comprising confirming at least one location information of the electronic device and time information on a time point of receiving the signal in response to the received signal,
wherein the information includes at least one the confirmed location information and the confirmed time information.

6. The method as claimed in claim 1, further comprising searching for a location of the wearable electronic device in response to the received signal,
wherein the information includes location information obtained by searching for the location.

7. An electronic device comprising:
a communication unit configured to:
establish a communication session with a wearable electronic device, and
receive a signal according to a state change of the wearable electronic device; and
a control unit configured to:
perform a control operation for storing information including a location of generation of the signal from the wearable electronic device in response to the received signal, and
output a warning corresponding to the information.

8. The electronic device as claimed in claim 7, further comprising an output unit configured to output the warning,
wherein the control unit is further configured to:
confirm a distance between the electronic device and the wearable electronic device, and
control the output unit to set an output of the warning to depend on the distance between the electronic device and the wearable electronic device.

9. A method for communicating with an electronic device by a wearable electronic device, the method comprising:
sensing a state of the wearable electronic device; and
transmitting a signal according to a state change of the wearable electronic device to an electronic device having a communication session established with the wearable electronic device.

10. The method as claimed in claim 9, wherein the signal includes a request for output of information including a location of generation of the signal from the wearable electronic device, and the signal includes at least one of an identifier of the wearable electronic device, location information of the wearable electronic device, a communication session release indication, and a device cooperation release indication.

11. The method as claimed in claim 9, wherein the wearable electronic device comprises an acceleration sensor, and determines the state change of the wearable electronic device according to a change in an acceleration value measured by the acceleration sensor and generates the signal.

12. The method as claimed in claim 11, wherein the signal is generated when the acceleration value is not greater than a first threshold, when the acceleration value is maintained during a pre-designated time period in a state where the acceleration value is not greater than the first threshold, or when a difference between the acceleration value and a previous acceleration value is greater than a second threshold.

13. The method as claimed in claim 9, wherein the wearable electronic device comprises at least one biometric sensor, and determines the state change of the wearable electronic device according to whether a biometric signal is sensed by the at least one biometric sensor and generates the signal.

14. The method as claimed in claim 9, further comprising confirming location information of the wearable electronic device,
wherein the signal includes the confirmed location information of the wearable electronic device.

15. A wearable electronic device comprising:
a sensing unit configured to sense a state of the wearable electronic device;
a control unit configured to perform a control operation for transmitting a signal according to a state change of the wearable electronic device, which is sensed by the sensing unit, to an electronic device having a communication session established with the wearable electronic device; and
a communication unit configured to:
establish a communication session with the electronic device, and
transmit the signal.
